# EUROPEAN PATENT APPLICATION

(11) **EP 1 791 129 A2**
(43) Date of publication of application: **30.05.2007**
(21) Application number: 06024310.2
(22) Date of filing: 23.11.2006
(51) Int. Cl.: G11B 27/10, G11B 20/10, G11B 19/00

(54) **Optical disk reproducing device**

(30) Priority: 24.11.2005 JP 2005338665
(71) Applicant: Funai Electric Co., Ltd., Daito-shi Osaka 574-0013 (JP)
(72) Inventor: Onishi, Yoshikazu c/o Funai Electric Co., Ltd., Osaka 574-0013 (JP)
(74) Representative: Beetz & Partner

(57) **Abstract**

The present application relates to an optical disk reproducing device which has a system controller (22) that performs a controlling process so that after an optical disk (1) storing still picture data is loaded, when the device is in an apparent stopped state, or while a slide show display using the still picture data is being performed until its end, undecoded still picture data are read from tracks of the optical disk (1) and are decoded, and the decoded still picture data are stored in an SDRAM (14). When reproduction is started, the system controller (22) reads out the decoded still picture data from the SDRAM (14) for a display device (20) to perform a slide show display.

## Description

### BACKGROUND OF THE INVENTION

### 1. Field of the Invention

The present invention relates to an optical disk reproducing device for reproducing information recorded on an optical disk. In particular, the present invention relates to an optical disk reproducing device having a function of a slide show display switching still pictures at a predetermined time interval when the information recorded on the optical disk includes still picture data.

### 2. Description of Related Art

For example, an optical disk of the DVD-Audio format stores not only audio data but also still picture data of a JPEG (Joint Photographic Experts Group) format. A conventional optical disk reproducing device having a function of a slide show display, which reads the still picture data from the optical disk and displays still pictures with switching them at a predetermined time interval, performs the following process for the slide show display.

First, when the optical disk reproducing device is loaded with an optical disk storing still picture data, an initial operation is performed for this optical disk. Then, a first track may be reproduced when a play key is pressed. Alternatively, if the user has designated a track, the track is played.

Specifically, an optical pickup for reading data recorded on the optical disk optically outputs an RF signal of the data of the track on the optical disk. The RF signal is amplified by an RF amplifier and is supplied to a digital signal processing portion. The digital signal processing portion converts the RF signal outputted by the RF amplifier into digital data, which are stored temporarily in a RAM after signal demodulating process and an error correcting process in accordance with a data format of the optical. After that, the data can be read out from the RAM.

Then, a stream separating portion separates audio data, sub picture data and still picture data based on a DVD-Audio format from data stream outputted from the digital signal processing portion. Among the data separated by the stream separating portion, the still picture data are decoded in accordance with a JPEG format in a video decoder. The decoded still picture data are temporarily stored an SDRAM (Synchronous Dynamic RAM). The decoded still picture data are read out from the SDRAM and are supplied to a video encoder and are converted into a video signal for display indicating still pictures. The video signal is supplied to a display device, which displays the still pictures by the slide show.

However, the conventional optical disk reproducing device has a problem to be solved. In order to read the still picture data recorded on the optical disk and to display the still pictures on the display device, a series of processes as described above are necessary, which include the data reading process by the optical pickup, the decoding process by the video decoder after the digital signal process and the displaying process by the display device. Therefore, the slide show display of the still pictures on the corresponding track is apt to be delayed.

JP-A-2004-296065 discloses a conventional technique of using a buffer for reading data that are used for reproduction including data to be read in advance and other data based on loading information to which initializing information refer. This conventional technique can improve extensibility of reproducing disk information and can improve efficiency in downloading Web information. However, it does not improve a speed of the slide show display of the still pictures on the track.

JP-A-2004-253022 discloses another conventional technique of a structure including a moving image decoder for decoding moving image data, a browser data buffer for storing main screen data for a browser and a browser for issuing request for reading browser data and for performing decoding. This conventional technique can realize reading operation of browser data while reproducing a moving image and can perform a browser display while reproducing a moving image without interruption. However, it does not improve a speed of the slide show display of the still pictures on the track.

JP-A-2003-304499 discloses still another conventional technique for performing multiple recording of still pictures having large quantity of data with moving images or sounds and for reproducing still pictures efficiently while reducing a process load. The reduction of a process load in this conventional technique does not always contribute to improve a speed of the slide show display of the still pictures because it merely causes reduction of a process load on the spot.

### SUMMARY OF THE INVENTION

An object of the present invention is to provide an optical disk reproducing device that can improve speed of a slide show display of still pictures.

An optical disk reproducing device according to the present invention is equipped with a system controller that performs a controlling process so that after an optical disk storing still picture data is loaded, when the device is in an apparent stopped state, or while a slide show display using the still picture data is being performed until its end, undecoded still picture data are read from tracks of the optical disk and are decoded, the decoded still picture data are stored in a memory, and the decoded still picture data are read out from the memory for the display device to perform the slide show display when reproduction is started.

In this structure, after the optical disk on which the still picture data are recorded is loaded, when the device is in an apparent stopped state, or while a slide show display using the still picture data is being performed until its end, undecoded still picture data are read from tracks of the optical disk and are decoded. This decoded still picture data are stored in a memory. When reproduction is started, the decoded still picture data are read out from the memory so that the display device performs the slide show display.

According to this structure, when the device is in an apparent stopped state, or while a slide show display using the still picture data is being performed until its end, undecoded still picture data are read from tracks of the optical disk and are decoded, decoded still picture data are stored in a memory, and the decoded still picture data are read out from the memory for the display device to perform the slide show display when reproduction is started. Therefore, time period necessary for reading the still picture data and decoding the same can be reduced. Thus, the slide show display of the still pictures can be performed at high speed. As a result, the user can enjoy a comfortable operation of the device for an audiovisual purpose.

In an preferred embodiment of the present invention, the apparent stopped state means a state where a play key has not been pressed in a predetermined time period and is in a wait state. Therefore, the decoded still picture data can be stored in the memory before the reproduction is started. Thus, a higher speed of the slide show display of still pictures can be realized.

In another preferred embodiment of the present invention, the system controller includes a play key press detection portion for determining whether or not a play key has been pressed in a predetermined time period after the optical disk storing still picture data is loaded a reproduction control portion for controlling reproduction to start from a first track or a designated track on the optical disk when it is determined that the play key has been pressed in the predetermined time period, a first still picture data storing portion for reading still picture data from the track on the optical disk and for decoding the data so as to store the decoded data in a memory when it is determined that the play key has not been pressed in the predetermined time period, a still picture data storage detecting portion for determining whether or not the memory stores decoded still picture data corresponding to the track to be reproduced next after starting reproduction of the current track, a display processing portion for making access to the memory so as to read out the decoded still picture data for the display device to display still pictures when it is determined that the memory stores decoded still picture data, a still picture data detecting portion for determining whether or not the track on the optical disk includes undecoded still picture data during a display end waiting time while the slide show is being displayed based on the still picture data, and a second still picture data storing portion for reading still picture data from the track on the optical disk and for decoding the data so as to store the decoded data in the memory when it is determined that the track on the optical disk includes undecoded still picture data.

Therefore, the system controller can realize a play key press detecting process, a reproducing control, a first still picture data storing process, a still picture data storage detection process, a displaying process, a still picture data detecting process and a second still picture data storing process. Thus, a time necessary for a reading process of still picture data and a decoding process can be reduced.

In the preferred embodiment of the present invention, the system controller further includes a table storing portion for storing a table in the memory when the decoded still picture data are stored in the memory, the table indicating a relationship between a track number of the track storing undecoded still picture data and decoded information indicating that still picture data of the track indicated by the track number is already decoded. The system controller refers to the table for performing a determination process by the still picture data storage detecting portion and a determination process by the still picture data detecting portion. Therefore, it is possible to determine whether or not the memory stores decoded still picture data corresponding to the track to be reproduced next and to determine whether or not the track stores undecoded still picture data.

As described above, according to the present invention, it is possible to reduce a time necessary for a reading process of still picture data and a decoding process. Thus, a slide show display of still pictures can be performed at high speed. Therefore, the user can enjoy a comfortable operation of the device for an audiovisual purpose.

### BRIEF DESCRIPTION OF THE DRAWINGS

Fig. 1 is a block diagram showing a structure of an optical disk reproducing device according to an embodiment of the present invention.
Fig. 2 is a block diagram showing a table of an example of a relationship between a track number of the track storing undecoded still picture data and decoded information indicating that still picture data of the track indicated by the track number is already decoded in the embodiment.
Fig. 3 is a flowchart for an explanation of a process for reproducing still pictures in the embodiment.

### DESCRIPTION OF THE PREFERRED EMBODIMENTS

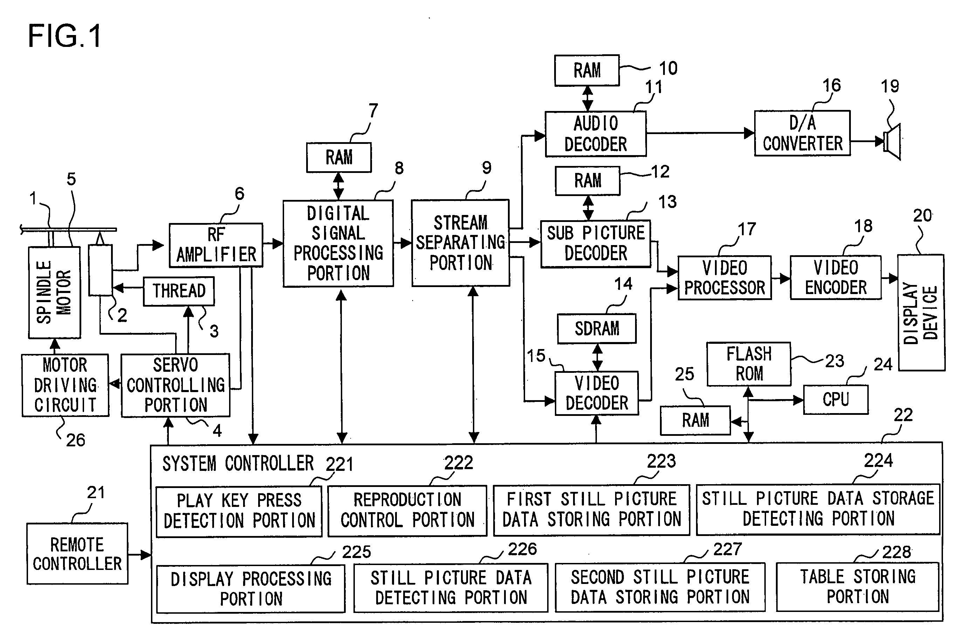

Now, an embodiment of the present invention will be described with reference to attached drawings. Fig. 1 is a block diagram showing a structure of an optical disk reproducing device according to an embodiment of the present invention.

This optical disk reproducing device includes a spindle motor 5 for rotating an optical disk 1, an optical pickup 2 for emitting a laser beam for reproducing information recorded on the optical disk 1 and for receiving light reflected by the optical disk 1, a thread 3 for moving the optical pickup 2 in the radial direction of the optical disk 1, a system controller 22 for controlling the entire device, and a servo controlling portion 4 for performing a control for moving a focus position of the laser beam with respect to a recording surface of the optical disk 1 in the vertical direction and in the horizontal direction in accordance with an instruction from the system controller 22 by driving the spindle motor 5 and the thread 3 via a motor driving circuit 26 and by moving an objective lens (not shown) embedded in the optical pickup 2.

In addition, this optical disk reproducing device includes an RF amplifier 6 for amplifying a RF signal that is a read signal from the optical pickup 2 when the optical disk 1 is read, a digital signal processing portion 8 for performing a signal demodulating process and an error correcting process in accordance with a data format of the optical disk 1 after converting the RF signal outputted by the RF amplifier 6 into digital data and for storing generated data in a RAM 7, and a stream separating portion 9 for separating audio data, sub picture data and video data (still picture data) based on the DVD-Audio format from a data stream outputted by the digital signal processing portion 8 responding to an instruction from the system controller 22.

In addition, this optical disk reproducing device includes an audio decoder 11 for performing a predetermined decoding process by entering audio data outputted by the stream separating portion 9, a RAM 10 for storing data temporarily for the audio decoder 11 to perform the decoding process, a sub picture decoder 13 for performing a predetermined decoding process by entering sub picture data outputted by the stream separating portion 9, a RAM 12 for storing data temporarily for the sub picture decoder 13 to perform the decoding process, a video decoder 15 for performing a predetermined decoding process by entering video data outputted by the stream separating portion 9, and a SDRAM 14 for storing data temporarily for the video decoder 15 to perform the decoding process and for storing decoded still picture data.

In addition, this optical disk reproducing device includes a video processor 17 for combining data outputted by the video decoder 15 and data outputted by the sub picture decoder 13 in accordance with an instruction from the system controller 22, a video encoder 18 for converting the composite data outputted by the video processor 17 into a video signal for display so that a display device 20 displays still pictures, and a D/A converter 16 for converting the data outputted by the audio decoder 11 into an analog audio signal so as to supply the signal to a speaker 19 for example via an audio circuit (not shown).

In addition, this optical disk reproducing device includes a remote controller 21 equipped with a play key for giving a play instruction to the system controller 22, a stop key for instructing a stop of reproduction, and other various operational keys. Furthermore, this optical disk reproducing device includes a flash ROM 23 storing programs and data for controlling each of structural elements of the device or the entire device, a CPU 24 for performing operational processes and for controlling the system controller 22 in accordance with programs and data stored in the flash ROM 23, and a RAM 25 for temporarily storing data necessary for the process by the CPU 24.

As a feature of the present embodiment, the system controller 22 includes a play key press detection portion 221 for determining whether or not a play key has been pressed in a predetermined time period after the optical disk 1 storing still picture data is loaded, a reproduction control portion 222 for controlling reproduction to start from a first track or a designated track on the optical disk 1 when it is determined that the play key has been pressed in the predetermined time period, and a table storing portion 228 for storing a table 100 too in the SDRAM 14 when the decoded still picture data are store in the SDRAM 14, the table 100 indicating a relationship between a track number of the track storing undecoded still picture data and decoded information indicating that still picture data of the track indicated by the track number is already decoded.

In addition, the system controller 22 includes a first still picture data storing portion 223 for reading still picture data from the track on the optical disk and for decoding the data so as to store the decoded data in the SDRAM 14 when it is determined that the play key has not been pressed in the predetermined time period, a still picture data storage detecting portion 224 for determining whether or not the SDRAM 14 stores decoded still picture data corresponding to the track to be reproduced next after starting reproduction of the current track by referring to the table 100, a display processing portion 225 for making access to the SDRAM 14 so as to read out the decoded still picture data for the display device 20 to display still pictures when it is determined that the SDRAM 14 stores decoded still picture data, a still picture data detecting portion 226 for determining whether or not the track on the optical disk 1 includes undecoded still picture data during a display end waiting time while the slide show is being displayed based on the still picture data by referring to the SDRAM 14, and a second still picture data storing portion 227 for reading still picture data from the track on the optical disk and for decoding the data so as to store the decoded data in the SDRAM 14 when it is determined that the track on the optical disk 1 includes undecoded still picture data.

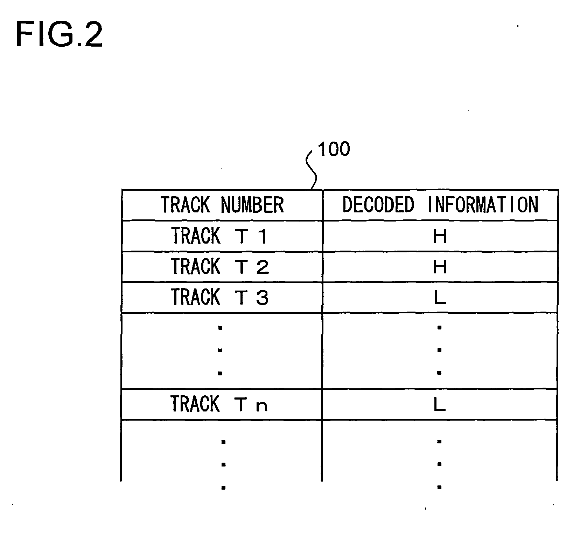

Fig. 2 is a block diagram showing a table of an example of a relationship between a track number of the track storing undecoded still picture data and decoded information indicating that still picture data of the track indicated by the track number is already decoded in the present embodiment.

In this table 100, the still picture data of the tracks T1 and T2 are already decoded, and the decoded information is set to a high level "H", for example. If it is not decoded yet, the decoded information is set to a low level "L", for example. Therefore, the determining process by the still picture data storage detecting portion 224 and the determining process by the still picture data detecting portion 226 can be performed by detecting the decoded information in the table 100.

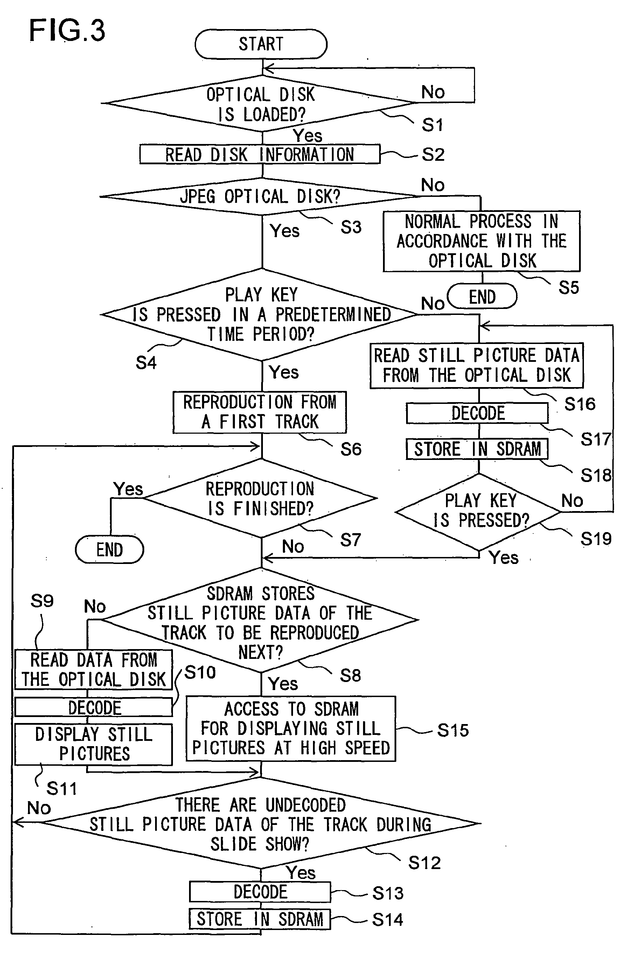

Fig. 3 is a flowchart for an explanation of a process for reproducing still pictures in the present embodiment. With reference to this flowchart and Figs. 1 and 2, the process for reproducing still pictures will be described.

First, when the optical disk 1 is loaded to the optical disk reproducing device, the system controller 22 detects insertion of the optical disk 1 (Step S1) and performs an initializing process with respect to the optical disk 1. More specifically, the system controller 22 drives the motor driving circuit 26 via the servo controlling portion 4 so that the spindle motor 5 rotates and drives the thread 3 via the servo controlling portion 4. Thus, the optical pickup 2 is moved in the radial direction with respect to the optical disk 1 so as to set it to an initial position. The system controller 22 also drives the objective lens (not shown) embedded in the optical pickup 2 via the servo controlling portion 4 so that a focus position of the laser beam is set to an optimal position by moving it with respect to the recording surface of the optical disk 1 in the vertical direction and in the horizontal direction. The system controller 22 also performs a tilting control of the optical pickup 2.

Furthermore, in this initializing process, the system controller 22 reads disk information from the optical disk 1 (Step S2) and determines whether or not the optical disk 1 is a JPEG optical disk including still picture data based on the read disk information (Step S3). If the optical disk 1 is not a JPEG optical disk, a normal process in accordance with the optical disk (a process for reproduction operation of the like when the play key is pressed) is performed (Step S5). If the optical disk 1 is a JPEG optical disk, the play key press detection portion 221 of the system controller 22 determines whether or not the play key of the remote controller 21 (or a play key of a console panel on a main body) has been pressed in a predetermined time period (Step S4).

If it is determined that the play key has been pressed in the predetermined time period, the reproduction control portion 222 of the system controller 22 starts reproduction from a first track on the optical disk 1 (the track of the track number T1), for example (Step S6). (Note that if the user has designated the track to be reproduced first by using the remote controller or other operation, the reproduction is started from the designated track.) Then, except for the case where the reproduction is finished promptly (Step S7), the still picture data storage detecting portion 224 of the system controller 22 determines whether or not the SDRAM 14 stores decoded still picture data corresponding to the track to be reproduced next by referring to the table 100 (see Fig. 2) (Step S8).

However, at this time point, the decoded still picture data are not stored in the SDRAM 14 yet because a first track is reproduced when the play key is pressed in the predetermined time period. Therefore, it is determined that the decoded still picture data are not stored in the SDRAM 14 (Step S8), and the system controller 22 controls the optical pickup 2 via the servo controlling portion 4 so that the still picture data can be read from the corresponding track on the optical disk 1.

Thus, an RF signal of data of the corresponding track on the optical disk 1 is outputted from the optical pickup 2 (Step S9), and the RF signal is amplified by the RF amplifier 6 and is supplied to the digital signal processing portion 8. The RF signal outputted by the RF amplifier 6 is converted into digital data by the digital signal processing portion 8. After that the signal demodulating process and an error correcting process are performed in accordance with a data format of the optical disk 1, and the generated data are stored in the RAM 7 temporarily. Then, data is read out from the RAM 7. Audio data, sub picture data and still picture data based on a predetermined DVD-Audio format are separated in the stream separating portion 9 from data stream outputted from the digital signal processing portion 8 in accordance with an instruction from the system controller 22.

Among data separated in the stream separating portion 9, the still picture data are decoded by the video decoder 15 in accordance with a JPEG format (Step S10), and the decoded still picture data are supplied to the video encoder 18 via the video processor 17. The data further supplied to the display device 20 from the video encoder 18 as a video signal for display showing still pictures. Thus, the display device 20 displays the still pictures as a slide show (Step S 11).

During this slide show (during the display end waiting time while the slide show display is performed based on the still picture data), the still picture data detecting portion 226 of the system controller 22 determines whether or not the track on the optical disk 1 includes undecoded still picture data by referring the table 100 (Step S12). The determination whether or not the track on the optical disk 1 includes undecoded still picture data can be performed as shown in Fig. 2, for example, in which the table 100 of a relationship between a track number and decoded information is stored in the SDRAM 14 (or other RAM) in advance, and this table 100 is referred.

If there is undecoded still picture data of the track in this slide show display (Step S12), the second still picture data storing portion 227 of the system controller 22 controls the optical pickup 2, the RF amplifier 6, the digital signal processing portion 8, the stream separating portion 9 and the video decoder 15 as described above so that the video decoder 15 perform the decoding process in accordance with the JPEG format (Step S 13). This decoded still picture data are stored in the SDRAM 14 (Step S 14).

After that, the process goes back to Step S7. If the reproduction is not finished, the process goes to Step S8, in which it is determined whether or not the SDRAM 14 stores decoded still picture data corresponding to the track to be reproduced next (Step S8). Since the decoded still picture data are stored in the SDRAM 14 in the process of Step S 14 at this time point, it is determined that the decoded still picture data are stored in the SDRAM 14, and the process goes to Step S15. Then, the display processing portion 225 of the system controller 22 makes access to the SDRAM 14 so as to read out the decoded still picture data for the display device 20 to display still pictures at high speed (Step S15). After that, the process goes to Step S12 so that a similar process is performed.

On the other hand, if it is determined that the play key has not been pressed in the predetermined time period in the Step S4, the first still picture data storing portion 223 of the system controller 22 controls the optical pickup 2 via the servo controlling portion 4 so that the still picture data can be read out from the corresponding track on the optical disk 1. Thus, an RF signal of data of the corresponding track on the optical disk 1 is outputted from the optical pickup 2 (Step S16), and the RF signal is amplified by the RF amplifier 6 and is supplied to the digital signal processing portion 8.

After the RF signal outputted by the RF amplifier 6 is converted into digital data in the digital signal processing portion 8, data are generated by the signal demodulating process and the error correcting process performed in accordance with a data format of the optical disk 1. The generated data are stored in the RAM 7 temporarily, and after that data are read out from the RAM 7. Audio data, sub picture data and still picture data based on a predetermined DVD-Audio format are separated in the stream separating portion 9 from data stream outputted from the digital signal processing portion 8 in accordance with an instruction from the system controller 22.

Among data separated in the stream separating portion 9, the still picture data are decoded by the video decoder 15 in accordance with a JPEG format (Step S17), and the decoded still picture data are stored in the SDRAM 14 (Step S 18). After that, when the play key is pressed (Step S19), the process goes to Step S8, in which it is determined whether or not the SDRAM 14 stores decoded still picture data corresponding to the track to be reproduced next. Since the decoded still picture data are stored in the SDRAM 14 in the process of Step S18 at this time point, it is determined that the decoded still picture data are stored in the SDRAM 14. The process goes to Step S15, in which the display processing portion 225 of the system controller 22 makes access to the SDRAM 14 so as to read out the decoded still picture data for the display device 20 to display still pictures at high speed (Step S15). After that, the process goes to Step S12, in which a similar process is performed.

As described above, according to the present embodiment, after an optical disk storing still picture data is loaded, when the play key has not pressed in a predetermined time period as a wait state or while a slide show display using the still picture data is being performed until its end, undecoded still picture data are read from tracks of the optical disk and are decoded, the decoded still picture data are stored in a memory, and the decoded still picture data are read out from the memory for the display device to perform the slide show display when reproduction is started. Therefore, a time necessary for a reading process of still picture data and a decoding process can be reduced. Thus, the slide show display of still pictures can be performed at high speed, so that the user can enjoy a comfortable operation of the device for an audiovisual purpose.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An optical disk reproducing device for reproducing information recorded on an optical disk, wherein the device is equipped with a system controller (22) that performs a controlling process so that after an optical disk (1) storing still picture data is loaded, when the device is in an apparent stopped state, or while a slide show display using the still picture data is being performed until its end, undecoded still picture data are read from tracks of the optical disk (1) and are decoded, the decoded still picture data are stored in a memory (14), and the decoded still picture data are read out from the memory (14) for the display device (20) to perform the slide show display when reproduction is started.

2. The optical disk reproducing device according to claim 1, wherein the apparent stopped state means a state where a play key has not been pressed in a predetermined time period and is in a wait state.

3. The optical disk reproducing device according to claim 1 or 2, wherein the system controller (22) includes a play key press detection portion for determining whether or not a play key has been pressed in a predetermined time period after the optical disk (1) storing still picture data is loaded, a reproduction control portion for controlling reproduction to start from a first track or a designated track on the optical disk (1) when it is determined that the play key has been pressed in the predetermined time period, a first still picture data storing portion (223) for reading still picture data from the track on the optical disk (1) and for decoding the data so as to store the decoded data in a memory (14) when it is determined that the play key has not been pressed in the predetermined time period, a still picture data storage detecting portion (224) for determining whether or not the memory stores decoded still picture data corresponding to the track to be reproduced next after starting reproduction of the current track, a display processing portion (225) for making access to the memory (14) so as to read out the decoded still picture data for the display device (20) to display still pictures when it is determined that the memory (14) stores decoded still picture data, a still picture data detecting portion (226) for determining whether or not the track on the optical disk (1) includes undecoded still picture data during a display end waiting time while the slide show is being displayed based on the still picture data, and a second still picture data storing portion (227) for reading still picture data from the track on the optical disk (1) and for decoding the data so as to store the decoded data in the memory (14) when it is determined that the track on the optical disk (1) includes undecoded still picture data.

4. The optical disk reproducing device according to at least one of claims 1 to 3, wherein the system controller (22) further includes a table storing portion (228) for storing a table (100) in the memory (14) when the decoded still picture data are stored in the memory (14), the table (100) indicating a relationship between a track number of the track storing undecoded still picture data and decoded information indicating that still picture data of the track indicated by the track number is already decoded, and the system controller (22) refers to the table (100) for performing a determination process by the still picture data storage detecting portion (224) and a determination process by the still picture data detecting portion (226).
